# EUROPEAN PATENT SPECIFICATION

(11) **EP 2 776 132 B1**
(45) Date of publication and mention of the grant of the patent: **29.04.2020**
(21) Application number: 12784663.2
(22) Date of filing: 06.11.2012
(51) Int. Cl.: A62B 19/02, A62D 9/00, B01D 53/62, B01D 53/86, B01J 23/89, B01J 21/18, B01J 23/52, B01J 35/00, B01J 37/02, B01J 37/03, B01J 37/06, B01J 37/14, B01J 37/18

(54) **APPARATUS FOR THE TREATMENT OF AIR**
LUFTBEHANDLUNGSGERÄT
APPAREIL POUR LE TRAITEMENT DE L'AIR.

(30) Priority: 07.11.2011 GB 201119171; 07.11.2011 US 201161556329 P
(43) Date of publication of application: 17.09.2014
(73) Proprietor: Anglo Platinum Marketing Limited, London SW1Y 5AN (GB)
(72) Inventor: POULSTON, Stephen, Ascot Berkshire SL5 9LS (GB); SMITH, Andrew William John, Reading Berkshire RG4 8QP (GB); BENNETT, Stephen Charles, Reading Berkshire RG4 5EL (GB); ROWSELL, Elizabeth, Hampton Middlesex TW12 2JH (GB)
(74) Representative: Mewburn Ellis LLP
(86) International application number: PCT/GB2012/052764
(87) International publication number: WO 2013/068737

(56) References cited:
- EP-A2- 0 129 406
- WO-A1-91/01175
- US-A- 4 536 375
- US-A- 4 623 637
- US-A1- 2011 171 076

## Description

The present invention concerns a apparatus, in particular, but not exclusively, a gas filter which is suitable for use in air purification for breathing apparatus such as a protective gas mask or respirator, and to a catalyst used in a gas treatment apparatus for oxidising carbon monoxide (CO).

Catalysts that are known and used for the oxidation of CO in gas filters include hopcalite, which is a mixture of copper and manganese oxides, and precious metals such as gold and platinum on support materials such as alumina and titania. Hopcalite is useful for the oxidation of carbon monoxide but its use in gas mask filters is known to have disadvantages arising from its sensitivity to moisture and also the relatively exothermic reaction it promotes which causes the purified gas exiting the filter to have an uncomfortably high temperature for breathing.

The catalysts described in JP 57084744 consist of platinum or palladium supported on a commercially available alumina carrier by impregnation of the alumina with a solution of the Pd or Pt salt followed by reduction of the metal compounds using a solution of hydrazine. US 4623637describes the use as an air purifier catalyst of a palladium compound impregnated into an alumina material which has been treated with a vanadium compound and heated to produce vanadium pentoxide. JP01159058 describes a carbon monoxide removing catalyst in which an alumina support having a particular pore structure is provided with at least one of Fe, Co, Ni, Mn, Cu, Cr, Sn or Ce and also Pt or Pd. The catalyst is said to be highly resistant to moisture. JP 602381848 provides a catalyst consisting of gold and an oxide selected from Mn, Fe, Co and Ni. EP 0129406 describes a catalyst device for purifying a CO-containing atmosphere which contains one or more platinum group metals in combination with tin(IV) oxide. In US4536375, a CO-contaminated breathable gas is purified using a catalyst comprising a promoted tin IV oxide-supported precious metal catalyst in which the promoter is one or more metals of group 1b, 3b, 7b and 8 of the Periodic Table (especially copper, nickel, manganese, silica or lanthanum) and the precious metal is platinum, palladium, rhodium, iridium or ruthenium. B. Qiao et al (Journal of Catalysis 261 (2009) 241 - 244) prepared a ferric hydroxide supported palladium catalyst for the oxidation of CO. However the authors concluded that the catalyst was less active than gold catalysts prepared by the same Another catalyst for the oxidation of CO is described in US 2011/0171076 A1.

Gas mask filters typically contain absorbents such as an activated carbon often impregnated with chemical compounds for treating and reducing or removing harmful compounds which may be present in the environment. The base activated carbon is usually derived from coal or coconut sources. Activated carbon may be impregnated with various metal compounds such as silver, zinc, copper, chromium and/or molybdenum compounds, inorganic compounds such as alkali metal hydroxides and organic compounds such as amines, phosphines or acids for the removal of toxic gases. We have found that the presence in a gas mask of an impregnated activated carbon, particularly a carbon containing an amine, such as triethylenediamine and/or materials which can release nitrogen-containing gases such as ammonia or amines may have an adverse effect on the activity of a carbon monoxide oxidation catalyst. It is important that the CO-oxidation catalyst is stable and capable of maintaining its activity in the presence of the amine compound.

It is an object of the invention to provide an alternative catalyst material for the oxidation of CO and which is useful in the manufacture of air treatment apparatus containing such volatile nitrogen-containing materials.

According to the invention, we provide an apparatus for the treatment of air, wherein air having a first concentration of carbon monoxide enters the apparatus and breathable air having a second concentration of carbon monoxide exits the apparatus, said first concentration being higher than said second concentration, the apparatus comprising a gas treatment means, comprising:
i) a catalyst for the oxidation of carbon monoxide comprising palladium and iron oxide and
ii) a source of a volatile nitrogen-containing compound, the source of volatile nitrogen-containing compound comprising an absorbent material impregnated with an amine or ammonia.

The apparatus comprises a gas treatment apparatus, suitable for the purification of air by removal of carbon monoxide, containing a catalyst comprising palladium and iron oxide.

The apparatus may take many different forms including gas filters and gas scrubbers which are used in a variety of gas masks, breathing apparatus and air purification equipment, whether used for personal protection equipment (PPE) or in collective protection systems for cleaning air within a defined space such as a submarine or other enclosed environment. The apparatus of the invention is intended to include gas filters and filtration units as well as active gas scrubbing units. Examples of gas treatment apparatus to which the invention applies include stand-alone systems for air cleaning, gas filters and filter cartridges for gas masks, self-contained self-rescuers (SCSR), escape hoods and other types of breathing apparatus requiring the removal of carbon monoxide from gas streams.

According to the invention we provide a gas treatment apparatus, according to claim 1, suitable for use in an air purifying apparatus for the production of breathable air, comprising:
i) a catalyst comprising palladium and iron oxide and
ii) a source of a volatile nitrogen-containing compound.

The source of the volatile nitrogen-containing compound is normally an amine, usually impregnated onto an absorbent which is typically an activated carbon. The absorbent may be present in the form of particles or a foam or cloth. Usually an activated carbon absorbent is provided in the form of a bed of particles having a size and size distribution capable of providing a through-flow of gas with a specified maximum pressure drop. For use in a filter for a gas mask or escape hood, an impregnated activated carbon is usually provided having a particle size in the range about 300 - 1000 µm, especially 400 - 850 µm (20 x 40 mesh). Special grades of impregnated activated carbon suitable for use in gas treatment apparatus are commercially available from various suppliers. Examples of such materials are RESPCARB™ and ASZM-TEDA available from Calgon Carbon Corporation or Chemviron.

Therefore in a preferred embodiment of the invention the apparatus comprises a gas filter suitable for use in an air purifying apparatus for the production of breathable air, comprising:
i) a catalyst comprising palladium and iron oxide and
ii) an activated carbon impregnated with from 1 - 10% by weight, especially 1 - 5%by weight, of an amine, especially triethylenediamine.

It is known that gold catalysts are active for removal of carbon monoxide and are sold commercially for use in gas masks as an alternative to the older hopcalite catalysts. However, according to published sources, a gold catalyst must be protected from ammonia and amines, because they tend to poison the catalyst and reduce the catalytic activity. Gold catalysts are therefore recommended to be used in combination with a guard bed (which may be hopcalite) for removing the catalyst poisons from a gas stream before the gas contacts the catalyst. The use of guard beds adds to the cost, complexity and bulk of a gas filter, which is a particular problem if the filter is intended for use in a gas mask or escape hood, for example, where a compact filter is required. It is a particular benefit of the filter of the present invention that the catalyst is resistant to poisoning by nitrogen-containing compounds. Therefore the filter preferably comprises the catalyst and an absorbent loaded with at least a nitrogen-containing compound and optionally other active gas treatment compounds in the absence of a guard bed. The resistance of the palladium-iron oxide catalyst to poisoning by nitrogen-containing compounds enables the catalyst to be mixed with the source of nitrogen-containing compound (e.g. particles of amine-impregnated activated carbon) if required, although it is more usual for the catalyst to be physically separated from the source of nitrogen-containing compound by a gas-permeable membrane, mesh, gauze or similar gas-permeable barrier. For example the gas treatment apparatus in the form of a gas filter may comprise a first layer comprising a bed of impregnated activated carbon particles and a second layer comprising a bed of particles of a catalyst comprising palladium and iron oxide, the first and second layers being separated by a gauze.

Preferably the catalyst comprises from 0.5 to 10%, more preferably from 1 to 4% of Pd, by weight. Preferably the remainder of the composition comprises iron and oxygen. In one embodiment of the invention the catalyst consists essentially of palladium, iron and oxygen. In a preferred embodiment the catalyst consists essentially of from 0.5 - 10% by weight of palladium, more preferably from 1 to 4% of Pd, the balance being essentially iron and oxygen. By "consisting essentially of" we mean that elements other than palladium, iron and oxygen, if present, are present at a level at which they have no material effect on the activity of the catalyst for the oxidation of carbon monoxide.

The catalyst may be made by coprecipitation methods. In a preferred coprecipitation method, a solution of palladium compound is mixed with a solution of an iron compound and then the mixed solution is added slowly, with mixing, to a solution of an alkaline precipitant, preferably at a temperature between about 25 - 100°C, especially 25 - 80 °C. When the addition is complete, the mixture may be aged for a period of at least 30 minutes, normally from about 30 minutes - 2 hours, at a temperature of about 30 - 80 °C. Suitable palladium compounds include palladium nitrate, palladium chloride. Suitable iron compounds include iron nitrate, iron chloride, iron sulphate. The solution of precipitant may be selected from those well-known in the art of catalyst preparation, such as alkali metal hydroxides, e.g. sodium or potassium hydroxides, carbonates and bicarbonates, ammonium hydroxide, and organic bases such as tetramethylammonium hydroxide. The precipitated mixed metal oxyhydroxide product is then separated from the supernatant and washed with water in order to remove traces of alkali metals, if present. Preferably the washing is continued until the precipitate contains < 0.5% of alkali metal, more preferably < 0.2% and especially <0.1% of alkali metal. It is then dried and subjected to a reduction step. Optionally, the dried material is calcined in air at an elevated temperature, e.g. 300 - 600 °C for at least 30 minutes. We have found that the reduction is effective when carried out by contact with a gas stream containing hydrogen, e.g. about 5% H₂ in N₂, at a temperature greater than about 50 °C but usually less than about 300 °C, especially less than 150°C, e.g. about 70 - 100°C. Optionally a continuous or semi-continuous precipitation process may be used, in which the alkaline precipitating agent and palladium and iron salt solutions are fed into a precipitating vessel equipped with a mixing means such as an impeller, either together or, if semi-continuous, in separate stages. In a continuous or semi-continuous precipitation method the residence time in the precipitation stage is preferably less than 1 minute. The mixture may then be moved into different vessels in order to provide ageing, heating, washing, filtration, drying and/or other process steps.

After drying, the precipitate is a palladium-iron oxy-hydroxide with Pd in the 2+ oxidation state. The sample is amorphous to X-ray diffraction (XRD). After reducing in hydrogen, the sample appears to be a mixture of Pd/Fe oxy-hydroxide and Pd/Fe₃O₄ as broad peaks of low-crystallinity magnetite as seen by XRD. Some of the Fe³⁺ has been reduced with the Pd²⁺ to Fe²⁺ and Pd metal. We refer to this species as Pd-FeOx. If the sample is first heated to 500°C, we see haematite instead of magnetite. In this specification, when we refer to "iron oxide" or "FeOx" in a catalyst for use in the oxidation of carbon monoxide in air, we mean the reduced form of the iron oxide/hydroxide species as described above, with or without pre-calcining. When we refer to "unreduced form of Pd-FeOx" or "precipitated Pd-FeOx" or similar terms, we mean the material after precipitation, drying etc which is not the reduced form described above, but which is a precursor thereto.

The apparatus according to the invention is capable of reducing the concentration of carbon monoxide in an oxygen-containing gas from 3600 ppm to less than 500 ppm over a continuous period of 10 minutes at 20 °C (more preferably at any temperature in the range from 0 to 25 °C) at a linear gas flow rate of at least 6cm per second , more preferably at a linear flow rate of at least 9cm per second. Preferably when the stream of air containing said first concentration of carbon monoxide is passed through the gas treatment means at 20 °C for 15 minutes, more preferably for a duration of up to one hour, and said first concentration of carbon monoxide is at least 3600ppm the gas treatment means is capable of treating the air such that the maximum instantaneous value of said second concentration of carbon monoxide is less than 500ppm. Preferably the apparatus according to the invention is capable of reducing the concentration of carbon monoxide in an oxygen-containing gas from 10000 ppm to less than 500 ppm over a continuous period of 10 minutes at 20 °C (more preferably at any temperature in the range from 0 to 25 °C) at a linear gas flow rate of at least 6cm per second , more preferably at a linear flow rate of at least 9cm per second. Preferably when the stream of air containing said first concentration of carbon monoxide is passed through the gas treatment means at 20 °C for 15 minutes, more preferably for a duration of up to one hour, and said first concentration of carbon monoxide is at least 9000ppm the gas treatment means is capable of treating the air such that the maximum instantaneous value of said second concentration of carbon monoxide is less than 500ppm.

The catalyst used in the gas treatment apparatus of the invention is effective for the oxidation of CO over a range of temperatures, from about 0 to about 50 °C. A measure of the effectiveness of a CO treatment catalyst which is used in the art is known as the CT number, expressed as ppm minutes. CT represents the accumulated total concentration (in ppm) of CO in the gas stream downstream of the catalyst bed over the duration of the test (in minutes), for a given flow rate of air to be treated containing a given first concentration of CO. The accumulated total concentration of CO over a particular duration of test may be calculated as the area under a plot of downstream CO concentration in ppm against time. The CT value is expressed as that accumulated total concentration in ppm multiplied by the time in minutes over which that accumulated concentration is measured. When the first concentration of carbon monoxide is 3600 ppm and the air stream is passed through the gas treatment apparatus for a continuous period of 15 minutes at a linear velocity of 9 cm per second, the CT value of CO in the air downstream of the gas treatment means is less than 6000 ppm minutes. A particular benefit of the invention is that in normal use at about 20 °C the treated gas exiting the apparatus has a temperature of less than 45 °C so that it may be breathed without undue discomfort.

The catalyst may be present in the form of particles or a foam or cloth. When the catalyst material is required in the form of granules the precipitate may be formed into suitable sized and shaped particles for use in the gas filter apparatus in which it is intended to be used. Suitable particle sizes and shapes depend on the intended application of the catalyst particles. Some gas mask filter applications require a particle size having a maximum dimension < 2mm, but other applications may require a different size or size distribution. Usually the catalyst is provided in the form of a bed of particles having a size and size distribution capable of providing a through-flow of gas with a specified maximum pressure drop. For use in a filter for a gas mask or escape hood, the catalyst is preferably present in the form of granules having a particle size in the range about 300 - 1000 µm, especially 400 - 850 µm (20 x 40 mesh). Larger particles may lead to the formation of channels through a bed of the catalyst so that some gas can pass through the filter without being adequately treated. When particles are too small, the pressure drop through the catalyst bed increases so that air becomes more difficult to inhale through the filter. The specification for the size of particles forming gas filter beds is set out in the applicable standards relating to breathing apparatus and can be selected by the skilled person to suit the particular application for which the gas treatment apparatus is intended. Suitably sized and shaped particles may be formed by grinding and/or sieving the dried and/or calcined precipitate or otherwise by the use of other forming methods, such as dry compaction, granulation, tableting or extrusion on the dried or wet precipitate. In a preferred method the catalyst is formed into particles using dry compaction, for example by means of a roll-compaction method, followed, if necessary, by breaking the compacted material into particles and then sieving the particles to the required size distribution. We have found that particles made by a compaction method are resistant to damage through attrition. The catalyst is normally reduced, and optionally passivated, after forming into particles.

Preferably, when the catalyst is present as a bed of particles, the catalyst bed has a maximum thickness in the direction of the air flow of less than 10mm, more preferably not greater than 5mm. It is a particular benefit of using the catalyst of the invention that its activity for the oxidation of carbon monoxide is relatively high so that the required reduction in CO concentration can be achieved using a relatively thin catalyst bed. This enables the apparatus to be relatively compact.

The formed catalyst particles may comprise additional materials such as inorganic or organic binders, lubricants etc. It is, however, currently preferred not to include any organic or inorganic binders in the formulation because we have found that commonly used binders impair the CO oxidation activity of the catalyst after ageing, particularly after ageing in the presence of a volatile nitrogen-containing compound such as an amine or ammonia. Some binders have also been found to produce softer particles having less resistance to damage from mechanical handling. Therefore the catalyst particles preferably contain no organic or inorganic binders such as boehmite, colloidal silica, ciment fondue, cement, cellulose derivatives, xanthan gum, acacia or polyvinyl alcohol.

The catalyst may alternatively be formulated into a coating composition which is used to coat particles of a catalyst support material, such as, for example, a monolith, minilith, sphere, foam or other shaped support. The coating may alternatively be applied directly to a part of the gas treatment apparatus of the invention.

Alternatively the CO-oxidation catalyst may be prepared by impregnation methods. A suitable impregnation method uses the well-known incipient wetness technique of impregnation in which a volume of solution containing the metal compounds is impregnated into a porous support material by spraying or tumbling, the volume being calculated to fill the pore volume of the support material, usually with less than 10% excess. In this method the precious metal and the iron compound are impregnated either together in a mixed solution or separately into a suitable support. A benefit of using an impregnation method is that a support material may be selected which has suitable properties for forming into the gas filter or scrubber medium. Properties such as hardness, particle size and shape and also porosity of the final catalyst may be obtained by selection of a suitable support material. For example, we believe that a high surface area particle of < 2mm dimension is desirable for use in manufacturing gas mask filters. Furthermore the particles should be hard and resistant to forming fines and dust during catalyst preparation, handling and loading. We have found that alumina, particularly gamma alumina particles, is particularly suitable for use as catalyst supports. The amount of iron in the catalyst formed by impregnation is preferably from 1 - 10%, e.g. 1 - 5%.

The CO-oxidation catalyst may be used in the gas filter either as a separate catalyst bed, e.g. as a layer of catalyst in a multi-layered arrangement, or alternatively mixed with other components of the air-purification system such as activated carbon materials, optionally absorbents impregnated with a nitrogen-containing compound.

The invention will be further described in the following examples, with reference to the accompanying drawings, which are:
Fig 1: A plot of CO and CO₂ concentration vs time using catalyst of invention;
Fig 2: A plot of CO and CO₂ concentration vs time using comparative catalysts;
Fig 3: A plot of CO and CO₂ concentration vs time using comparative catalyst;
Fig 4: A plot of CO concentration vs time using a catalyst of the invention;
Fig 5: A plot of CO concentration vs time using a catalyst of the invention.

### Example 1: Preparation of Pd-FeOx catalyst by precipitation

1577.86g K₂CO₃ was dissolved in 5L demineralised water in a 10L glass vessel equipped with overhead stirrer and reflux condenser and the solution was heated to 60°C with the stirrer set to 300 rpm. Separately, 2529.90g Fe(NO₃)₃.9H₂O and 152.44g Pd(NO₃)₂ were dissolved in 5L water. The Pd/Fe solution was added beneath the surface of the K₂CO₃ solution via a pump over 60 minutes. After all of the Pd/Fe had been added the resulting brown slurry was held at 60°C for 1 hour before the solid was collected by filtration. The solid was thoroughly washed with 2L portions of demineralised water at 60°C until the conductivity was <50 µS. After washing, the solid catalyst was dried on the filter to give a gelatinous brown solid which was then dried in an air oven at 105°C for 48 hours. The dry solid was crushed and sieved to between 425 and 850 µm and then divided into two portions. One portion of the dry particles was calcined in air at 500°C for 2 hours (10°C/minute heating ramp, 2-hour hold at 500°C, followed by cooling at 30°C/minute to 80°C) and then reduced in a stream of 5% H₂ in N₂ at 80 °C for 3 hours. The sample was then cooled to < 30°C and passivated by gradual introduction of an oxygen-containing gas. The second portion was not calcined but only reduced at 80°C, after a heating ramp rate of 2°C/minute, and passivated as described above. On analysis of a portion of the calcined particles by XRD, the sample was found to be of low crystallinity. After reduction, analysis by XRD shows some Pd metal and some magnetite peaks, although the material has low crystallinity. Elemental analysis of the material by ICP- AES found the material contains 2.35% Pd and 0.08%K. All other metallic elements were present at less than 0.1%.

### Example 2 (Comparative) Preparation of Pt-FeOx catalyst

A catalyst was made according to the method described in Example 1, using platinum nitrate instead of the palladium nitrate. 47.39g K₂CO₃ was dissolved in 500 ml demineralised water in a 2L round bottomed flask equipped with an overhead stirrer and reflux condenser. The resulting solution was then heated to 60°C with the stirrer set to 300 rpm. Separately 75.90g Fe(NO₃)₃.9H₂O and 2.45g Pt(NO₃)₄ were dissolved in 500 ml water. The Pt/Fe solution was added beneath the surface of the K₂CO₃ solution via a pump over 60 minutes. After all of the Pt/Fe had been added the resulting brown slurry was held at 60°C for 1 hour before the solid was collected by filtration. The solid was thoroughly washed with 2L portions of demineralised water at 60°C until the conductivity was <50 µS. After washing, the solid catalyst was dried on the filter to give a gelatinous brown solid which was then dried in an air oven at 105°C for 48 hours. The dry solid was sieved to between 425 and 850 µm, reduced at 80°C, after a heating ramp rate of 2°C/minute, and passivated as described in Example 1. Elemental analysis of the material by ICP- AES found the material contains 2.39%Pt and 0.08%K.

### Example 3 (Comparative): Preparation of Au-FeOx catalyst

A catalyst was made according to the method described in Example 1, using tetrachloroauric acid instead of the palladium nitrate.

47.55g K₂CO₃ was dissolved in 500 ml demineralised water in a 2L round bottomed flask equipped with and overhead stirrer and reflux condenser. The resulting solution was then heated to 60°C with the stirrer set to 300 rpm. Separately 75.90g Fe(NO₃)₃.9H₂O and 0.78g HAuCl₄ were dissolved in 500 ml water. The Au/Fe solution was added beneath the surface of the K₂CO₃ solution via a pump over 60 minutes. After all of the Au/Fe had been added the resulting brown slurry was held at 60°C for 1 hour before the solid was collected by filtration. The solid was thoroughly washed, dried, crushed and sieved as described in Example 2. Elemental analysis of the material by ICP- AES found the material contains 2.22% Au and 0.06%K.

### Example 4 CO oxidation test

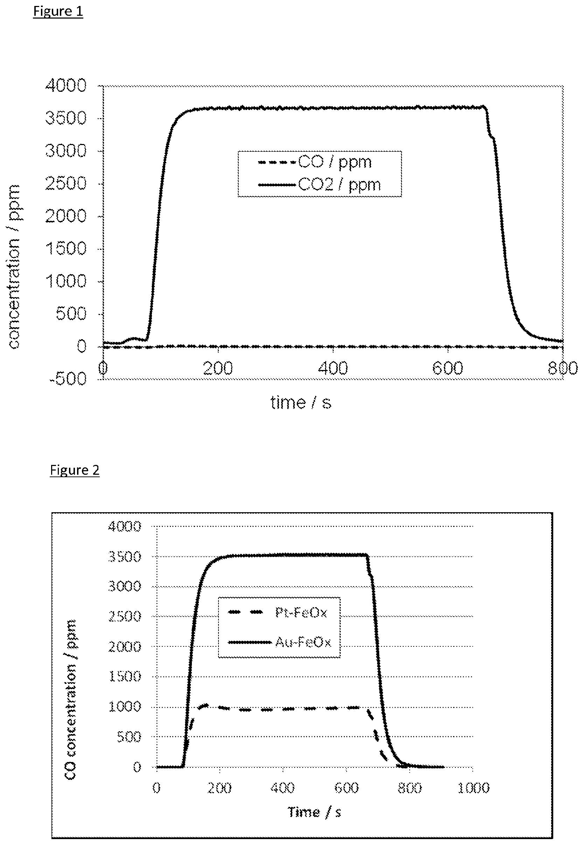

0.05g of sieved granules (850 - 425 µm sieve sizes) made in Example 1 was placed in a tubular plug flow reactor of internal diameter 4mm at approximately 21°C and about 90% relative humidity. A flow of gas made up of 3600ppm CO, 20% O₂ in N₂ was introduced after 50 seconds and maintained through the reactor at 100ml/min. The outlet gas composition was analysed using an infra-red gas analyser and a graph of CO and CO₂ concentration was recorded over a period of 10 minutes. The results are shown in Fig 1 and show no breakthrough of CO during the 10 minute test. In Fig 1, the upper (solid) line represents the concentration of CO₂ and the lower (dotted) line represents the CO concentration in the gas exiting the reactor tube.

### Example 5 CO oxidation test

The Au and Pt catalysts described in Examples 2 and 3 were tested as described in Example 4 with the results shown in Fig 2. Significant breakthrough of CO was evident during the 10 minute test, demonstrating that Pd/FeOx is superior to these other two catalysts.

### Example 6: (Comparative) Preparation of Au/TiO₂

4.05g HAuCl₄ was dissolved in 4.5L of demineralised water and 0.1M NaOH solution was added at room temperature until the pH of the solution was about 10.75. Once the pH was stable, 100g Degussa P25 TiO₂ was added over about 5 minutes. Addition of the TiO₂ caused the pH to drop to 7.81 so some more 0.1M NaOH solution was added to increase the pH to 9 - 10. The resulting mixture was stirred for an hour and 0.1M NaOH was added as needed to keep the pH between 9 and 10. In total 78ml 0.1M NaOH was added to the mixture after the TiO₂ had been added.

After stirring for an hour, the solid was collected by filtration. The solid was washed with demineralised water until the conductivity of the filtrate was <10µS. The solid was then dried in an oven overnight at 105°C to give 96.02g of the product as a light purple powder.

### Catalyst Ageing Procedure

Ageing Procedure A: Catalyst ageing was carried out in the presence of an amine-impregnated activated carbon, of the type typically found in gas mask filters. The carbon used for the ageing studies was a commercially available activated carbon containing 1% by weight triethylenediamine (TEDA). The catalyst was placed in a glass vial with an amount of carbon having a bulk volume equivalent to three times the bulk volume of catalyst. The catalyst layer was separated from the carbon layer by cotton wool. The vial was sealed under reduced pressure in a foil bag which had been flushed with nitrogen. The bag was maintained at 70°C for 5 weeks. After ageing, the catalyst (without the activated carbon) was removed from the vial for testing.

In order to identify the effects of the carbon and the ageing process, 2 comparative studies were run:
C1: The ageing procedure described in A was run in the absence of the activated carbon.
C2: A sample of catalyst was sealed into a glass bottle in air and stored at room temperature for 5 weeks.

### Example 7: (Comparative) Effect of ageing with activated carbon on Au/TiO₂

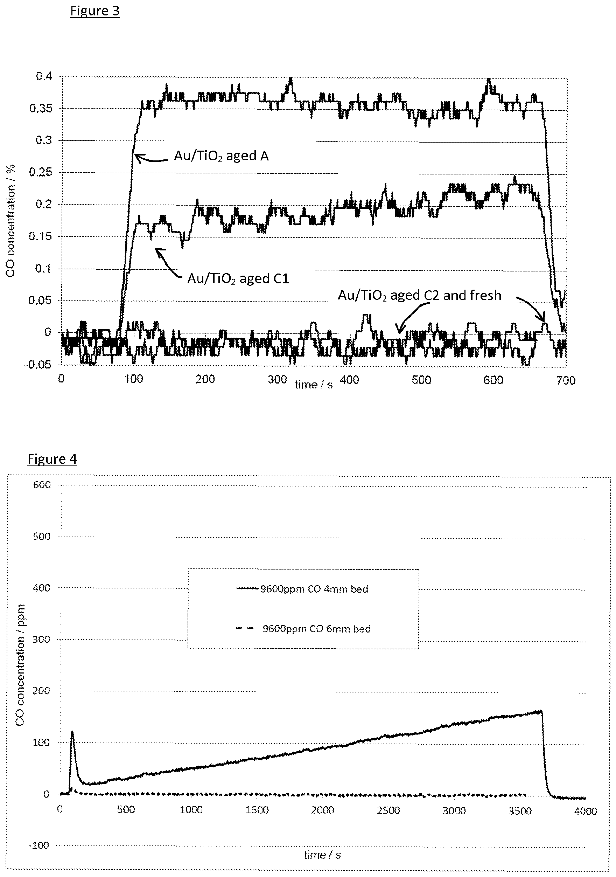

A sample of the Au/TiO₂ catalyst prepared in Example 6 was aged according to the procedure described above. Further samples were treated according to the comparative procedures C1 and C2. Following the ageing and comparative procedures, the catalysts were tested for CO oxidation using the test as described in Example 4. A fresh sample of catalyst was also tested. The results are shown in Fig 3. The results show that, although the fresh and C2 sample gave almost no CO slip, the samples aged at 70°C showed considerable slip with the A procedure catalyst, aged in the presence of activated carbon, showing almost no CO oxidation activity.

### Example 8: Effect of ageing with activated carbon Pd/FeOx

A series of catalysts containing different amounts of Pd were prepared using the preparation procedure described in Example 1 with variations to change the Pd loading. A sample of each catalyst was calcined before reduction in air at 500°C for 2 hours (10°C/minute heating ramp, 2-hour hold at 500°C, followed by cooling at 30°C/minute to 80°C). A second sample of each catalyst was tested without calcining but after reduction in hydrogen as described in Example 1. A sample of each of the pre-calcined and uncalcined catalysts was aged following the A ageing procedure described above. A second sample of each was tested fresh. Fresh and aged catalysts were tested for CO oxidation activity according to the description in Example 4.

The maximum instantaneous CO slip through the catalyst in ppm was measured and is shown in Table 1. Pd loadings shown are nominal loadings. The data shows that at lower Pd loadings (<4wt%) the un-calcined catalysts show less CO slip than the calcined catalysts and that below 2wt% Pd the aged catalysts show considerably more CO slip than the fresh catalyst.

**Table 1**

| Catalyst Pd/FeOx Pd% | Calcined before reduction | | Not calcined before reduction | |
|---|---|---|---|---|
| | Aged | Fresh | Aged | Fresh |
| 1 | N/T | 2127 | 1281 | 287 |
| 2 | >3000 | 486 | 179 | 134 |
| 2.5 | >3000 | 398 | 10 | 60 |
| 3 | N/T | N/T | 0 | 83 |
| 4 | 0 | 0 | 0 | 0 |
| 5 | 0 | 0 | 0 | 0 |
| 15 | 0 | 0 | 0 | 0 |

### Example 9: Preparation and mechanical testing of granulated Pd/FeOx

A dried 2.5%Pd/FeOx catalyst which had been made according to Example 1 was pre-crushed on an Alexanderwerk RAN 70 grater/shredder with a 0.40 mm Conidur™ screen. The crushed particles were then passed through a roll compactor (Alexanderwerk WP120) using a compacting force between 50 and 140 bar. The resulting catalyst particles were sieved to 0.4 - 0.8mm particle size and reduced at 80°C as described in Example 1. The catalyst was then sealed into a gas mask filter assembly, having area dimensions of about 108mm x 75 mm, to give a 4.5mm deep bed together with a 12mm deep bed of activated carbon containing a TEDA. The filter assembly was then treated to simulate the NIOSH requirement of Escape Hoods for vibration conditioning and the rough handling drop test described in NIOSH Standard Test Procedure: CET-APRS-STP-CBRN-0411: "Laboratory Durability Conditioning Process for Environmental, Transportation and Rough Handling Use Conditions on Chemical, Biological, Radiological and Nuclear (CBRN) (Air-Purifying or Self-Contained) Escape Respirator". The filter assembly was then tested for CO oxidation at 25°C with a gas composition of 3600ppm CO in air with a relative humidity of 90% at a flow rate of 32 l/min through the filter assembly. The outlet CO concentration shows CO breakthrough of only 4 ppm. If the catalyst particles had broken down during the test then the appearance of voids and channelling would have been expected to result in the passage of CO through the filter. The results show that only minor amounts of CO passed through the filter.

### Example 10: Compositions including organic binders

4 different compositions containing dried, unreduced Pd/FeOx and an organic binder selected from acacia, xanthan gum, polyvinylalcohol (PVA) and hydroxypropyl cellulose (HPC) were made into granules. The binders were selected because they do not require treatment at high temperature which may adversely affect the performance of the sample. Each binder was added as an aqueous solution to a separate sample of dried, unreduced Pd-FeOx catalyst powder containing 2.5% Pd, in an amount sufficient to yield a granular composition containing 2.5 wt% of the binder when dried. The catalyst and binder solution were mixed at 3000 rpm in a Speed Mixer for one minute to give a granular product which was then dried at 105°C, sieved to 425 - 850 µm and reduced at 80°C as described in Example 1 above. A sample of the resulting granular catalyst material was aged using Ageing Procedure A described above, for 3 weeks. Following ageing, the CO oxidation test was run. The equivalent maximum CO slip for all of the binders after ageing is shown in Table 2. These results show that the use of a binder to form a granule is detrimental to the performance of the catalyst after ageing in contact with an activated carbon.

**Table 2**

| Binder | None | Acacia | | Xanthan gum | | PVA | | HPC | |
|---|---|---|---|---|---|---|---|---|---|
| | aged | fresh | aged | fresh | aged | fresh | aged | fresh | aged |
| Max CO slip (ppm) | <50 | 83 | 1787 | 206 | 1777 | 322 | 2778 | 101 | 1316 |

### Example 11: Compositions including inorganic binders

Separate compositions incorporating dried, unreduced Pd-FeOx catalyst powder containing 2.5% Pd, were formed containing 2.5 wt% of two different inorganic binder mixtures when dried. The binders were added to the catalyst in the form of slurries and mixed, dried and reduced as described in Example 9. The samples were tested fresh and after ageing for one and two weeks. The equivalent maximum CO slip for the samples is shown in Table 3.

**Table 3**

| Binder | Portland cement + Attagel™ co-binder | | | Ciment fondu + Attagel™ co-binder | |
|---|---|---|---|---|---|
| | fresh | Aged 1 week | Aged 2 weeks | fresh | Aged 1 week |
| Max CO slip (ppm) | 175 | 405 | 615 | 115 | 351 |

### Example 12 Catalyst preparation by impregnation

10g of gamma-alumina powder having a surface area > 100 m²g⁻¹ was impregnated with a mixed palladium nitrate and iron nitrate solution containing 0.5g Pd equivalent and 0.25g Fe as iron nitrate with a further 2 ml water using the incipient wetness technique in which the volume of the impregnation solution is calculated to fill the total pore volume of the alumina ± 10%. The powder was dried in an oven at 105°C for 12 hours and pelletised to 0.4 - 0.8 mm. The formed sample was then reduced under 5%H₂ in N₂ for 2 hours. Finally the catalyst was passivated in air. The resulting catalyst contained 5 wt %Pd and 2.5 wt% Fe on gamma-alumina. The catalyst was tested for CO oxidation performance using the test method described in Example 4 above. No breakthrough of CO was evident during a 10 minute test.

### Example 13: CO Oxidation Test at higher CO inlet concentration, following storage

A gas mask filter assembly was made as described in Example 9 using a catalyst made according to example 1 but with a reduction temperature of 90 °C. The assembly was then stored under N₂ in a sealed foil pack for 6 months at ambient temperature. After storage, the pack was opened and the catalyst was extracted from the assembly. A quantity of the catalyst was placed in a tubular plug flow reactor of internal diameter 4mm at room temperature, (approximately 21 - 25°C), and about 90% relative humidity. The amount of catalyst used was sufficient to form a 4mm long bed in the reactor (0.05g) or a 6mm bed (0.075g). A flow of gas made up of 9600ppm CO in a 20% O₂ in N₂ gas mixture was introduced after 50 seconds and maintained through the reactor at linear velocity of 13 cm/s. The outlet gas composition was analysed using an infra-red gas analyser and a graph of CO concentration was recorded over a period of one hour. The results are shown in Fig 4.

### Example 14: CO Oxidation Test following storage

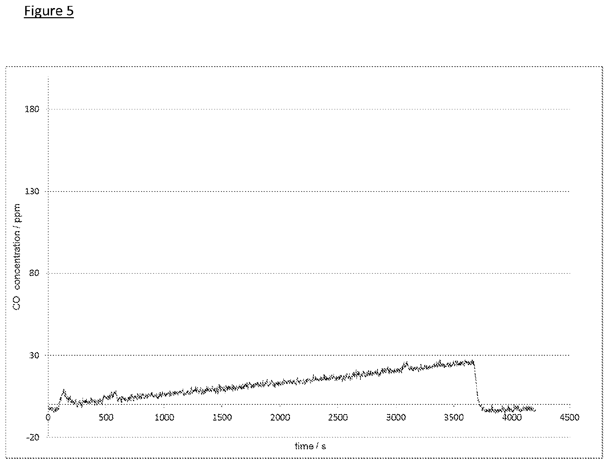

0.05g of the catalyst extracted from the gas filter assembly after storage was placed in a tubular plug flow reactor of internal diameter 4mm at room temperature, (approximately 21 - 25°C), and about 90% relative humidity. A flow of gas made up of 3600ppm CO in a 20% O₂ in N₂ gas mixture was introduced after 50 seconds and maintained through the reactor at linear velocity of 13 cm/s. The outlet gas composition was analysed using an infra-red gas analyser and a graph of CO and CO₂ concentration was recorded over a period of one hour. The results are shown in Fig 5.

## Claims

1. An apparatus for the treatment of air, wherein air having a first concentration of carbon monoxide enters the apparatus and breathable air having a second concentration of carbon monoxide exits the apparatus, said first concentration being higher than said second concentration, the apparatus comprising a gas treatment means, comprising:
i) a catalyst for the oxidation of carbon monoxide comprising palladium and iron oxide and
ii) a source of a volatile nitrogen-containing compound, the source of volatile nitrogen-containing compound comprising an absorbent material impregnated with an amine or ammonia.

2. An apparatus according to claim 1, wherein the catalyst comprises from 0.5 to 10% of palladium, by weight.

3. An apparatus according to claim 1 or claim 2, wherein said catalyst is made by a method in which a mixed oxide and hydroxide containing iron and palladium is precipitated from an acid solution containing soluble iron and palladium compounds.

4. An apparatus according to claim 1 or claim 2, wherein said iron oxide and palladium is supported on a porous support material.

5. An apparatus according to any one of claims 1 to 4, wherein the catalyst comprises particles having a size in the range from 300 - 1000 µm.

6. An apparatus according to any one of claims 1 to 5, wherein the catalyst is present as a bed of particles and said catalyst bed has a maximum thickness in the direction of the air flow of less than 10mm.

7. An apparatus according to any one of claims 1 to 6, wherein the catalyst is present in a coating.

8. An apparatus according to any one of claims 1 to 7, wherein said absorbent material comprises an activated carbon in the form of a bed of particles, a cloth or foam.

9. An apparatus according to any one of claims 1 to 8, containing no hopcalite.

10. An apparatus according to any one of claims 1 to 9, wherein no guard bed for the removal of catalyst poisons is located between the catalyst and the absorbent material.

11. An apparatus according to any one of claims 1 to 10, in the form of a filter assembly.

12. An apparatus according to any one of claims 1 to 11, in the form of a gas filter, filter cartridge, gas mask, self-contained self-rescuer, escape hood, personal breathing apparatus or air scrubbing system.

13. An apparatus according to any one of claims 1 to 12, capable of reducing the concentration of carbon monoxide in an oxygen-containing gas from 3600 ppm to less than 500 ppm over a continuous period of 10 minutes at 20 °C at a linear air flow rate of 9 cm / second.

14. A method of treating air to form breathable air comprising the step of passing a stream of air containing a first concentration of carbon monoxide through a gas treatment means comprising:
i) a catalyst for the oxidation of carbon monoxide comprising palladium and iron oxide and
ii) a source of a volatile nitrogen-containing compound, the source of volatile nitrogen-containing compound comprising an absorbent material impregnated with an amine or ammonia, such that at least a portion of carbon monoxide contained in said air is oxidised and that the air downstream of said gas treatment means contains a second concentration of carbon monoxide which is less than said first concentration.

15. A method according to claim 14, wherein when the stream of air containing said first concentration of carbon monoxide is passed through said gas treatment means at 20 °C for 15 minutes and said first concentration of carbon monoxide is at least 3600ppm the maximum instantaneous value of said second concentration of carbon monoxide is less than 500ppm.

16. A method according to claim 15, wherein, when the first concentration of carbon monoxide is 3600 ppm and the air stream is passed through the gas treatment apparatus for a continuous period of 15 minutes at a linear velocity of 9 cm per second, the CT value of CO in the air downstream of the gas treatment means is less than 6000 ppm minutes.

17. A method of treating air to form breathable air comprising the step of contacting a stream of air containing a first concentration of carbon monoxide with a catalyst for the oxidation of carbon monoxide comprising palladium and iron oxide such that at least a portion of carbon monoxide contained in said air is oxidised and that the air downstream of said gas treatment means contains a second concentration of carbon monoxide which is less than said first concentration, wherein said air is also brought into contact with a volatile nitrogen-containing compound, the source of nitrogen containing compound comprising an absorbent material impregnated with an amine or ammonia.

## Patentansprüche

1. Vorrichtung zur Behandlung von Luft, wobei Luft, die eine erste Konzentration an Kohlenmonoxid aufweist, in die Vorrichtung eintritt und atembare Luft, die eine zweite Konzentration an Kohlenmonoxid aufweist, aus der Vorrichtung austritt, wobei die erste Konzentration höher ist als die zweite Konzentration, wobei die Vorrichtung ein Gasbehandlungsmittel umfasst, das Folgendes umfasst:
i) einen Katalysator zur Oxidation von Kohlenmonoxid, umfassend Palladium und Eisenoxid, und
ii) eine Quelle einer flüchtigen stickstoffhältigen Verbindung, wobei die Quelle der flüchtigen stickstoffhältigen Verbindung ein absorbierendes Material umfasst, das mit einem Amin oder Ammoniak imprägniert ist.

2. Vorrichtung nach Anspruch 1, wobei der Katalysator 0,5 bis 10 Gew.-% Palladium umfasst.

3. Vorrichtung nach Anspruch 1 oder 2, wobei der Katalysator durch ein Verfahren hergestellt wird, in dem ein Mischoxid und -hydroxid, das Eisen und Palladium enthält, aus einer Säurelösung, enthaltend lösliche Eisen- und Palladiumverbindungen, ausgefällt werden.

4. Vorrichtung nach Anspruch 1 oder 2, wobei das Eisenoxid und Palladium auf einem porösen Trägermaterial getragen sind.

5. Vorrichtung nach einem der Ansprüche 1 bis 4, wobei der Katalysator Teilchen umfasst, die eine Größe im Bereich von 300 bis 1000 µm aufweisen.

6. Vorrichtung nach einem der Ansprüche 1 bis 5, wobei der Katalysator als Teilchenbett vorliegt und das Katalysatorbett in Richtung der Luftströmung eine maximale Dicke von weniger als 10 mm aufweist.

7. Vorrichtung nach einem der Ansprüche 1 bis 6, wobei der Katalysator in einer Beschichtung vorhanden ist.

8. Vorrichtung nach einem der Ansprüche 1 bis 7, wobei das absorbierende Material Aktivkohle in Form eines Teilchenbetts, eines Gewebes oder eines Schaums umfasst.

9. Vorrichtung nach einem der Ansprüche 1 bis 8, die kein Hopcalit enthält.

10. Vorrichtung nach einem der Ansprüche 1 bis 9, wobei kein Schutzbett zum Entfernen von Katalysatorgiften zwischen dem Katalysator und dem absorbierenden Material angeordnet ist.

11. Vorrichtung nach einem der Ansprüche 1 bis 10 in Form einer Filteranordnung.

12. Vorrichtung nach einem der Ansprüche 1 bis 11 in Form eines Gasfilters, einer Filterkartusche, einer Gasmaske, einer umluftunabhängigen Selbstrettungsvorrichtung, einer Abzugshaube, eines persönlichen Atemschutzgeräts oder eines Luftreinigungssystems.

13. Vorrichtung nach einem der Ansprüche 1 bis 12, die dazu in der Lage ist, die Konzentration von Kohlenmonoxid in einem sauerstoffhältigen Gas über einen durchgehenden Zeitraum von 10 min bei 20 °C bei einer linearen Luftströmungsrate von 9 cm/s von 3600 ppm auf weniger als 500 ppm zu reduzieren.

14. Verfahren zum Behandeln von Luft, um atembare Luft zu erzeugen, umfassend den Schritt des Leitens einer Luftströmung, enthaltend eine erste Kohlenmonoxidkonzentration, durch ein Gasbehandlungsmittel, das Folgendes umfasst:
i) einen Katalysator zur Oxidation von Kohlenmonoxid, umfassend Palladium und Eisenoxid, und
ii) eine Quelle einer flüchtigen stickstoffhältigen Verbindung, wobei die Quelle der flüchtigen stickstoffhältigen Verbindung ein absorbierendes Material umfasst, das mit einem Amin oder Ammoniak imprägniert ist, so dass zumindest ein Teil des in der Luft enthaltenen Kohlenmonoxids oxidiert wird und die Luft stromab des Gasbehandlungsmittels eine zweite Konzentration an Kohlenmonoxid enthält, die kleiner ist als die erste Konzentration.

15. Verfahren nach Anspruch 14, wobei, wenn die Luftströmung, die die erste Konzentration an Kohlenmonoxid enthält, 15 min lang bei 20 °C durch das Gasbehandlungsmittel geleitet wird und die erste Konzentration an Kohlenmonoxid zumindest 3600 ppm beträgt, der maximale Momentanwert der zweiten Konzentration an Kohlenmonoxid weniger als 500 ppm beträgt.

16. Verfahren nach Anspruch 15, wobei, wenn die erste Konzentration an Kohlenmonoxid 3600 ppm beträgt und die Luftströmung für einen durchgehenden Zeitraum von 15 min bei einer linearen Geschwindigkeit von 9 cm/s durch die Gasbehandlungsvorrichtung geleitet wird, der CT-Wert des CO in der Luft stromab des Gasbehandlungsmittels kleiner ist als 6000 ppm min.

17. Verfahren zum Behandeln von Luft, um atembare Luft zu erzeugen, umfassend den Schritt des Kontaktierens einer Luftströmung, enthaltend eine erste Konzentration an Kohlenmonoxid, mit einem Katalysator zur Oxidation von Kohlenmonoxid, umfassend Palladium und Eisenoxid, so dass zumindest ein Teil des in der Luft enthaltenen Kohlenmonoxids oxidiert wird und dass die Luft stromab des Gasbehandlungsmittels eine zweite Konzentration an Kohlenmonoxid enthält, die kleiner ist als die erste Konzentration, wobei die Luft auch mit einer flüchtigen stickstoffhältigen Verbindung in Kontakt gebracht wird, wobei die Quelle einer stickstoffhältigen Verbindung ein absorbierendes Material umfasst, das mit einem Amin oder mit Ammoniak imprägniert ist.

## Revendications

1. Appareil pour le traitement de l'air, dans lequel de l'air ayant une première concentration de monoxyde de carbone entre dans l'appareil et de l'air respirable ayant une seconde concentration de monoxyde de carbone quitte l'appareil, ladite première concentration étant supérieure à ladite seconde concentration, l'appareil comprenant un moyen de traitement de gaz, comprenant :
i) un catalyseur pour l'oxydation de monoxyde de carbone comprenant un oxyde de palladium et de fer et
ii) une source d'un composé volatil contenant de l'azote, la source de composé volatil contenant de l'azote comprenant un matériau absorbant imprégné d'une amine ou d'ammoniaque.

2. Appareil selon la revendication 1, dans lequel le catalyseur comprend de 0,5 à 10 % de palladium, en poids.

3. Appareil selon la revendication 1 ou la revendication 2, dans lequel ledit catalyseur est fabriqué par un procédé dans lequel un oxyde et hydroxyde mixte contenant du fer et du palladium est précipité à partir d'une solution acide contenant des composés solubles de fer et de palladium.

4. Appareil selon la revendication 1 ou la revendication 2, dans lequel ledit oxyde de fer et de palladium est supporté sur un matériau de support poreux.

5. Appareil selon l'une quelconque des revendications 1 à 4, dans lequel le catalyseur comprend des particules ayant une taille dans la plage de 300 à 1 000 µm.

6. Appareil selon l'une quelconque des revendications 1 à 5, dans lequel le catalyseur est présent sous la forme d'un lit de particules et ledit lit de catalyseur a une épaisseur maximale dans la direction de l'écoulement de l'air inférieure à 10 mm.

7. Appareil selon l'une quelconque des revendications 1 à 6, dans lequel le catalyseur est présent en un revêtement.

8. Appareil selon l'une quelconque des revendications 1 à 7, dans lequel ledit matériau absorbant comprend un charbon actif sous la forme d'un lit de particules, d'un tissu ou d'une mousse.

9. Appareil selon l'une quelconque des revendications 1 à 8, ne contenant pas d'hopcalite.

10. Appareil selon l'une quelconque des revendications 1 à 9, dans lequel aucun lit de protection pour l'élimination des poisons catalytiques n'est situé entre le catalyseur et le matériau absorbant.

11. Appareil selon l'une quelconque des revendications 1 à 10, sous la forme d'un ensemble filtre.

12. Appareil selon l'une quelconque des revendications 1 à 11, sous la forme d'un filtre à gaz, d'une cartouche filtrante, d'un masque à gaz, d'un dispositif de sauvetage autonome, d'un masque de protection, d'un appareil respiratoire personnel ou d'un système d'épuration d'air.

13. Appareil selon l'une quelconque des revendications 1 à 12, apte à réduire la concentration de monoxyde de carbone dans un gaz contenant de l'oxygène de 3 600 ppm à moins de 500 ppm sur une période continue de 10 minutes à 20 °C à un débit d'air linéaire de 9 cm/seconde.

14. Procédé de traitement d'air pour former de l'air respirable comprenant l'étape de passage d'un courant d'air contenant une première concentration de monoxyde de carbone à travers un moyen de traitement de gaz comprenant :
i) un catalyseur pour l'oxydation de monoxyde de carbone comprenant un oxyde de palladium et de fer et
ii) une source d'un composé volatil contenant de l'azote, la source de composé volatil contenant de l'azote comprenant un matériau absorbant imprégné d'une amine ou d'ammoniaque,
de telle manière qu'au moins une partie du monoxyde de carbone contenu dans ledit air est oxydée et que l'air en aval dudit moyen de traitement de gaz contient une seconde concentration de monoxyde de carbone qui est inférieure à ladite première concentration.

15. Procédé selon la revendication 14, dans lequel lorsque le courant de l'air contenant ladite première concentration de monoxyde de carbone est passé à travers ledit moyen de traitement de gaz à 20 °C pendant 15 minutes et ladite première concentration de monoxyde de carbone est d'au moins 3 600 ppm, la valeur instantanée maximale de ladite seconde concentration de monoxyde de carbone est inférieure à 500 ppm.

16. Procédé selon la revendication 15, dans lequel, lorsque la première concentration de monoxyde de carbone est de 3 600 ppm et le courant d'air est passé à travers l'appareil de traitement de gaz pendant une période continue de 15 minutes à une vitesse linéaire de 9 cm par seconde, la valeur CT du CO dans l'air en aval du moyen de traitement de gaz est inférieure à 6 000 ppm minutes.

17. Procédé de traitement d'air pour former de l'air respirable comprenant l'étape de mise en contact d'un courant d'air contenant une première concentration de monoxyde de carbone avec un catalyseur pour l'oxydation de monoxyde de carbone comprenant un oxyde de palladium et de fer de telle manière qu'au moins une partie du monoxyde de carbone contenu dans ledit air est oxydée et que l'air en aval dudit moyen de traitement de gaz contient une seconde concentration de monoxyde de carbone qui est inférieure à ladite première concentration, dans lequel ledit air est également amené en contact avec un composé volatil contenant de l'azote, la source de composé contenant de l'azote comprenant un matériau absorbant imprégné d'une amine ou d'ammoniaque.
